# FASCICULE DE BREVET EUROPEEN

(11) **EP 2 727 096 B1**
(45) Date de publication et mention de la délivrance du brevet: **04.12.2019**
(21) Numéro de dépôt: 12744037.8
(22) Date de dépôt: 02.07.2012
(51) Int. Cl.: G06Q 10/06, G06Q 30/06, G08B 13/14, G08B 21/02, B60R 25/102

(54) **PROCEDE ET SYSTEME DE SURVEILLANCE D'UN VEHICULE PROPOSE A LA LOCATION**
VERFAHREN UND SYSTEM ZUR ÜBERWACHUNG EINES LEIHWAGENS
METHOD AND SYSTEM FOR MONITORING A RENTAL VEHICLE

(30) Priorité: 30.06.2011 FR 1102066
(43) Date de publication de la demande: 07.05.2014
(73) Titulaire: Bluecarsharing, 92420 Vaucresson (FR)
(72) Inventeur: RESSAYRE, Sandrine, F-78610 Auffargis (FR); THIEULENT, Franck, F-93400 Saint Ouen (FR)
(74) Mandataire: IPAZ
(86) Numéro de dépôt international: PCT/FR2012/051528
(87) Numéro de publication internationale: WO 2013/001256

(56) Documents cités:
- EP-A1- 1 724 168
- WO-A1-2005/095167
- US-A1- 2004 093 291
- US-A1- 2006 111 822
- US-A1- 2009 146 846

## Description

La présente invention concerne un procédé de surveillance d'un véhicule proposé à la location. Elle concerne également un système mettant en œuvre un tel procédé.

Le domaine de l'invention est le domaine de la surveillance de véhicules proposés à la location et plus particulièrement de véhicules électriques. Plus particulièrement, l'invention concerne le domaine de la surveillance de véhicules proposés à la location sur une zone déterminée comprenant une pluralité de sites de location.

### Etat de la technique

On connait actuellement des véhicules fonctionnant avec une ou plusieurs batteries électriques et des sites, dits de location, permettant de prendre un véhicule en location ou de remettre un véhicule loué en fin de location.

Ces sites comprennent généralement une borne de charge permettant de charger les batteries du véhicule loué pendant le stationnement du véhicule.

Les stations de location et/ou de charge de véhicules peuvent être localisées et concentrées au niveau d'une zone géographique seulement, appelée zone de location. Cette caractéristique pose le problème de la surveillance et de la localisation des véhicules électriques en cours de location pour éviter qu'un véhicule ne se retrouve dans en dehors de la zone de location et ne puisse pas revenir dans la zone de location pour atteindre un site de location et/ou de charge avant que la ou les batteries du véhicule ne se déchargent complètement.

Par ailleurs, le fait qu'un véhicule se trouve en dehors de la zone de location peut être un signe d'une utilisation frauduleuse du véhicule tel qu'un vol du véhicule. Or il n'existe aucun procédé et système de surveillance automatisé permettant de répondre à cette préoccupation.

Les documents US 2004/093291 A1 et EP1724168 décrivent des procédés de surveillance d'un véhicule proposé à la location, comprenant une étape de signalisation d'anomalie.

Un but de l'invention est de remédier aux inconvénients précités.

Un autre but de l'invention est de proposer un procédé et un système de surveillance d'un véhicule électrique permettant de s'assurer qu'un véhicule en cours de location ne se retrouve en dehors de la zone de location avec sa ou ses batteries déchargées.

Encore un autre but de l'invention est de proposer un procédé et un système de surveillance d'un véhicule électrique proposé à la location permettant de détecter une utilisation frauduleuse du véhicule en vue du vol du véhicule.

### Exposé de l'invention

L'invention propose d'atteindre au moins l'un des buts précités par un procédé de surveillance d'un véhicule proposé à la location, tel que spécifié dans la revendication 1.

Ainsi, le procédé selon l'invention permet de réaliser une surveillance efficace d'un véhicule en location en vue d'une part de s'assurer que le véhicule en cours de location ne se retrouve pas en dehors de la zone de location avec sa ou ses batteries déchargées. Ainsi, le procédé selon l'invention permet de s'assurer que le véhicule puisse atteindre une station de charge à chaque location.

Par ailleurs, le procédé selon l'invention permet de réaliser une surveillance d'un véhicule en cours de location permettant de détecter une intention d'utilisation frauduleuse du véhicule ou une utilisation frauduleuse du véhicule, par exemple en vue du vol du véhicule.

Optionnellement, l'étape de vérification peut être effectuée par un site distant, dit central, ledit procédé comprenant en outre une étape de transmission des coordonnées de localisation du véhicule audit site central.

L'étape de vérification peut également être effectuée par le véhicule. Celui-ci transmet alors de préférence le résultat de l'étape de vérification au site central, éventuellement et de préférence avec ses coordonnées de localisation.

Le procédé peut également transmettre au site central, quel que soit l'élément effectuant l'étape de vérification, des données relatives à un identifiant du véhicule et/ou un identifiant d'un utilisateur utilisant le véhicule.

Selon un mode de réalisation particulier, l'étape de vérification peut être réalisée uniquement si le véhicule est en mouvement.

Les étapes de transmission et/ou de vérification peuvent être réalisées selon une fréquence prédéterminée ou selon une distance prédéterminée parcourue par le véhicule.

L'étape de transmission et/ou l'étape de vérification peut être réalisée uniquement ou en plus, sur requête du site central ou d'un opérateur ou encore de la part de l'utilisateur.

Le procédé selon l'invention peut en outre comprendre une étape de vérification de données relatives au cap et/ou à la destination du véhicule.

Les données de cap/destination peuvent ensuite être vérifiées par le site central ou le véhicule, au moins lorsque le véhicule est hors de la zone prédéterminée.

Des mesures particulières à exécuter peuvent être prises si le cap du véhicule est tel que le véhicule revient vers la zone prédéterminée. De telles mesures particulières peuvent comprendre un arrêt de la signalisation préalablement déclenchée, ou l'accord d'un délai de sursis avant l'application d'une alarme ou d'une sanction.

Avantageusement, l'étape de signalisation peut comprendre une étape d'affichage d'une alerte sur une interface utilisateur du véhicule, tel qu'une alerte sonore ou visuelle.

L'étape de signalisation peut comprendre une étape d'émission d'un appel vers le véhicule, au travers du réseau GPRS grâce auquel le véhicule et le site central peuvent communiquer.

L'étape de signalisation peut également comprendre l'envoi d'un message tel qu'un message SMS à destination de l'utilisateur ou des forces de l'ordre.

Une telle étape d'envoi de message peut permettre notamment à l'utilisateur qui est censé utiliser le véhicule d'être prévenu si ce n'est pas lui qui est dans la voiture et ainsi d'alerter directement le service de location ou les forces de l'ordre ou de s'identifier auprès d'un opérateur ou des forces de l'ordre qui souhaitent vérifier la légitimité qu'il détient pour louer le véhicule.

L'étape de signalisation est de préférence déclenchée ou initiée par le site central.

Le procédé selon l'invention peut comprendre, avant l'étape de signalisation, une étape, dite de test supplémentaire, testant une condition supplémentaire devant être remplie pour déclencher l'alarme.

Une telle condition supplémentaire préalable à une étape de signalisation peut comprendre un éloignement du véhicule supérieur à une distance prédéterminée de la zone prédéterminée, par exemple avant d'émettre une signalisation par appel du véhicule ou l'envoi du SMS à l'utilisateur.

Une telle condition supplémentaire préalable à une étape de signalisation peut comprendre la non-réponse de l'utilisateur à un appel du site central (plus particulièrement le centre d'appel) vers le véhicule durant une durée prédéterminée, par exemple avant l'envoi d'un SMS aux forces de l'ordre.

Des conditions supplémentaires différentes permettent de déterminer plusieurs niveaux de signalisation afin d'adapter la signalisation à différentes situations et d'éviter de réaliser une signalisation pour une détection erronée causée par un mauvais fonctionnement d'un composant du système mettant en œuvre un tel procédé, ou un composant du véhicule ou simplement du réseau de communication.

Le procédé selon l'invention peut en outre comprendre une étape d'envoi depuis le site central d'une donnée déclenchant la modification du fonctionnement du véhicule, de préférence le blocage de celui-ci.

Une telle étape peut par exemple comprendre l'envoi d'une donnée relative au démarrage du véhicule, déclenchant un signal d'anti-démarrage du véhicule. Le véhicule sera ainsi bloqué, une fois que l'utilisateur aura arrêté le moteur.

Une telle donnée pourra par la suite être rectifiée par l'envoi manuel par un opérateur du service d'un message avec une donnée de démarrage, par exemple dans le cas où l'utilisateur s'est correctement identifié auprès du service de location après blocage du véhicule et s'engage à revenir vers la zone prédéterminée.

Selon un autre aspect de l'invention, il est proposé un système de surveillance d'un véhicule proposé à la location, tel que spécifié dans la revendication 8.

L'invention s'applique particulièrement à la gestion d'un parc de véhicules électriques interchangeables destinés à la location et pour lesquels une pluralité de stations de location est prévue.

D'autres avantages et caractéristiques apparaîtront à l'examen de la description détaillée de modes de réalisation nullement limitatifs, et des dessins annexés sur lesquels :
- la figure 1 est une représentation schématique d'un système de gestion d'un parc de véhicules proposés à la location dans lequel l'invention peut être mise en oeuvre ;
- la figure 2 est une représentation schématique d'un système selon l'invention ;
- la figure 3 est une représentation schématique des signaux intervenants lors du démarrage d'un véhicule mis en œuvre dans le procédé et système selon l'invention ; et
- la figure 4 est une représentation schématique d'un exemple de procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si c'est cette partie uniquement qui est suffisante pour conférer un avantage technique ou pour différencier l'invention par rapport à l'état de la technique antérieur.

En particulier toutes les variantes et modes de réalisation décrits sont combinables entre eux si rien ne s'oppose à cette combinaison sur le plan technique.

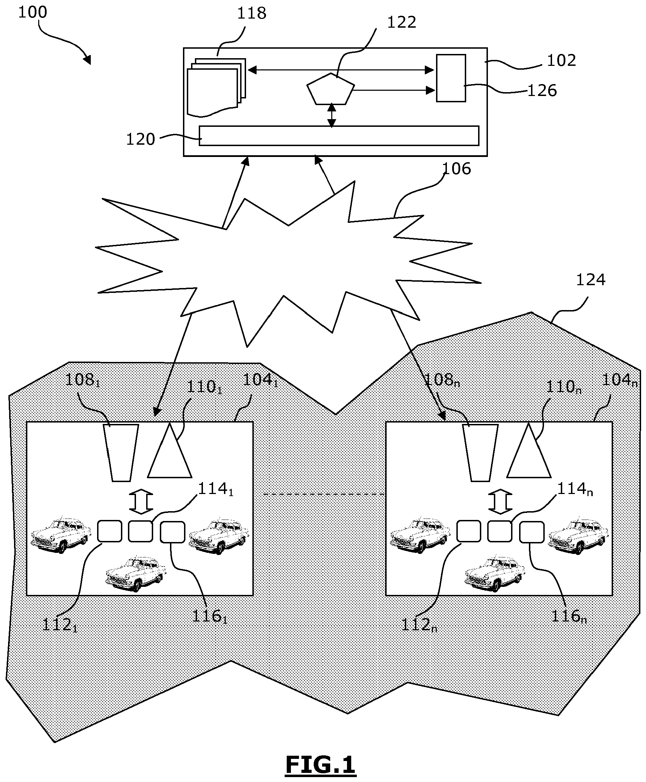

La figure 1 est une représentation schématique d'un système de gestion globale d'un parc de véhicules électriques proposés à la location.

Le système 100 représenté sur la figure 1 comprend un site central 102 (également appelé organe central dans la suite de la description) connecté à plusieurs sites - ou stations - 104₁-104ₙ, dits de location au travers d'un réseau de communication 106 sans fil, par exemple GPRS, ou d'un réseau filaire, par exemple de type DSL. De préférence, chaque station est reliée au site central par l'intermédiaire des deux réseaux distincts, ce qui permet une connexion en continu même si l'un des réseaux est défaillant.

Chaque station de location comprend une borne d'abonnement 108 pour l'enregistrement d'un nouvel abonné, une borne de location 110 pour la location d'un véhicule et plusieurs bornes de charge 112-116, chaque borne de charge étant prévue pour charger un véhicule muni d'une batterie électrique à un emplacement de stationnement.

Le site central 102 peut être connecté directement à chacune des bornes d'une station de location 104 au travers du réseau 106 ou seulement à la borne d'abonnement et/ou à la borne de location et/ou aux bornes de charge 112-116.

Au moins deux bornes d'une station de location sont connectées entre elles au travers d'une connexion filaire (non représentée).

Le site central 102 est également agencé pour se connecter à un véhicule électrique comprenant un boîtier de connexion avec un ou plusieurs éléments du véhicule et/ou une interface de communication avec l'utilisateur, par l'intermédiaire d'un réseau GPRS. Chaque véhicule est de ce fait équipé d'une puce GSM.

Le site central 102 est également agencé pour échanger des informations avec un appareil de communication portable tel qu'un PDA, un téléphone portable, etc., porté par un opérateur du service de location et également relié au site central par l'intermédiaire d'un réseau GPRS.

Le système permet de gérer une pluralité de véhicules comprenant chacun une unité de commande apte à communiquer avec l'organe central et avec différents organes du véhicule, et une interface utilisateur.

Les utilisateurs sont aptes à interagir avec les différentes bornes ainsi qu'avec les différents éléments des véhicules. En outre, le service de location de véhicule avec le système selon l'invention peut être également effectué à l'aide des opérateurs et de leur terminal mobile tel qu'un PDA, qui peuvent intervenir dans le service.

Le site central 102 comprend en outre une base de données 118 dans laquelle sont enregistrés les identifiants d'utilisateur en association avec les identifiants des véhicules utilisés par ces utilisateurs.

La base de données 118 est mise à jour à chaque nouvelle location ou à chaque fin de location.

Le site central 102 comprend en outre un module de communication 120 avec un ou plusieurs véhicules au travers du réseau 106 directement ou indirectement par l'intermédiaire d'une borne.

Le site central 102 peut comprendre en outre un module d'analyse 122 de données de localisation reçues du véhicule au travers du réseau de communication 106 pour déterminer le positionnement du véhicule par rapport à une zone prédéterminée 124 préalablement renseignée et pour détecter une anomalie en fonction de critères prédéterminés, par exemple pour déterminer si le véhicule se trouve dans la zone prédéterminée, si le véhicule se trouve en dehors de la zone prédéterminée à une distance inférieure à une distance prédéterminée ou encore si le véhicule se trouve en dehors de la zone prédéterminée à une distance supérieure à une distance prédéterminée, etc.

En fonction de l'analyse réalisée et si une anomalie est détectée, le module d'analyse 122 peut alerter un module 126 de gestion/émission de données de signalisation et/ou d'alertes qui peuvent comprendre des messages, par exemple SMS, émis vers un opérateur ou vers les forces de l'ordre au travers d'un réseau de communication sans fil, tel que le réseau GPRS 106, ou filaire tel que le réseau ADSL ou encore des données émises vers le véhicule et visant à limiter ou bloquer le fonctionnement du véhicule telles qu'une donnée de type ESA correspondant à une donnée d'autorisation de démarrage d'un véhicule.

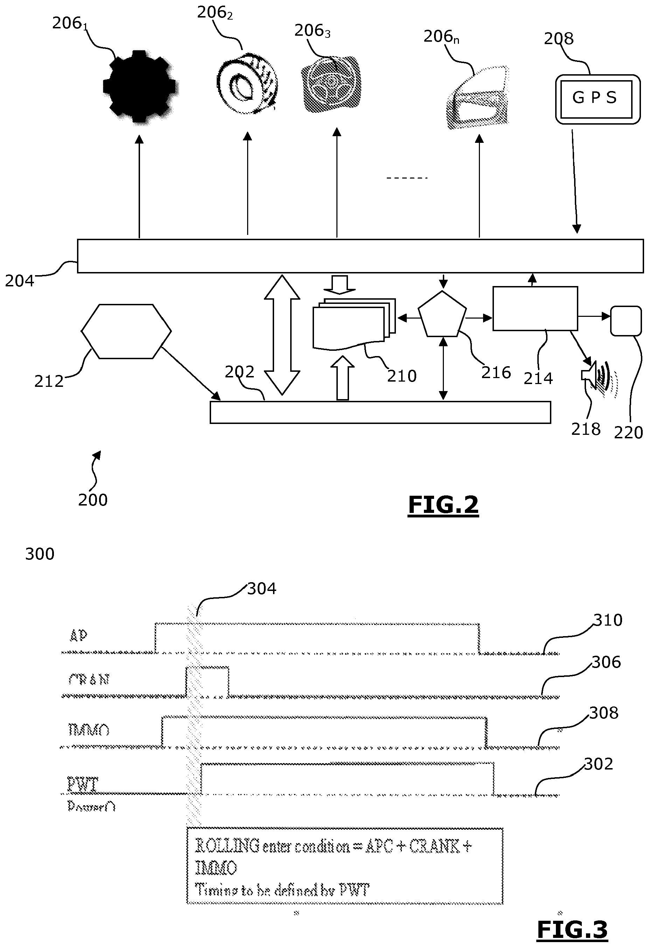

Nous allons maintenant décrire en référence à la figure 2 les éléments d'un système de surveillance d'un véhicule selon l'invention.

Le système 200 représenté sur la figure 2 comprend un module de communication 202 permettant au véhicule de communiquer avec le site central de manière directe à l'aide notamment d'un réseau GPRS, ou par l'intermédiaire d'une borne de charge, de location ou d'abonnement.

Le système 200 comprend en outre un module de commande 204 permettant de commander au moins un élément ou organe 206 par exemple un moteur 206₁, une roue 206₂, un volant 206₃ ou un 206ₙ du véhicule (non représenté) et permettant de de bloquer/limiter le fonctionnement de cet élément en fonction de données reçues du module de commande 204 que en fonction de données reçues depuis le site central.

Le système 200 comprend en outre au moins un moyen de géolocalisation 208 communicant au module de commande 204 la position du véhicule, par exemple des coordonnées de géolocalisation.

Le système 200 comprend en outre des moyens 210 de mémorisation de données au niveau du véhicule, par une donnée d'identifiant de l'utilisateur ayant loué le véhicule et/ou une donnée relative au fonctionnement d'un élément 206.

Le système comprend en outre un moyen d'identification 212 d'un utilisateur par lecture d'un identifiant de type RFID ou biométrique. Lorsque le module d'identification 212 est disposé au niveau du véhicule, il communique avec le module de communication 202.

Le système 200 comprend en outre un module 214 de gestion/émission de données d'alerte vers l'utilisateur ou vers le site central au travers d'un réseau de télécommunication directement ou en passant par l'intermédiaire du module de communication 202.

Le système comprend en outre un module d'analyse 216 équipant le véhicule, agencé pour recevoir les données de géolocalisation du véhicule et les comparer à des données relatives à une zone prédéterminée pour détecter une anomalie en fonction de critères prédéterminés, par exemple pour déterminer si le véhicule se trouve dans la zone prédéterminée, si le véhicule se trouve en dehors de la zone prédéterminée à une distance inférieure à une distance prédéterminée ou encore si le véhicule se trouve en dehors de la zone prédéterminée à une distance supérieure à une distance prédéterminée, etc. Pour réaliser cette analyse le module d'analyse 216 peut également demander au site central au moins une donnée au travers du module de communication.

Le système 200 comprend en outre des moyens d'émission d'une alarme au niveau du véhicule tels qu'un ou plusieurs haut-parleurs 218 qui peuvent être les haut-parleurs du véhicule, et un ou plusieurs écrans d'affichage 220 qui peuvent être un écran d'affichage d'un ordinateur de bord du véhicule.

Nous allons maintenant décrire en référence à la figure 3, les différents signaux intervenant pour le démarrage d'un véhicule proposé à la location selon l'invention.

Le démarrage, matérialisé par le signal PWT 302, peut être effectué seulement si, dans une période de mesure, la période grisée 304, les signaux intervenant dans le démarrage du véhicule ont tous une valeur prédéterminée qui ici est une valeur positive.

Le signal 'Cran' matérialisé par la ligne 306 correspond au signal de démarrage envoyé par la clé de contact lorsque l'utilisateur demande le démarrage.

Le signal Immo matérialisé par la ligne 308 correspond à celui généré par une donnée ESA, c'est-à-dire le droit pour un utilisateur de démarrer le moteur. Cette donnée est communiquée par le site central après identification de l'utilisateur et validation de ses droits.

Le signal AP matérialisé par la ligne 310 est généré par un autre élément du véhicule, ou une unité de commande qui vérifie que tous les éléments du véhicule sont dans un état satisfaisant, tel que par exemple les portes sont bien ouvertes ou fermées, que la batterie est débranchée, ou que la trappe de charge est fermée, etc.

Ainsi, si la donnée ESA a une valeur prédéterminée, le signal IMMO est négatif et le véhicule ne peut pas démarrer.

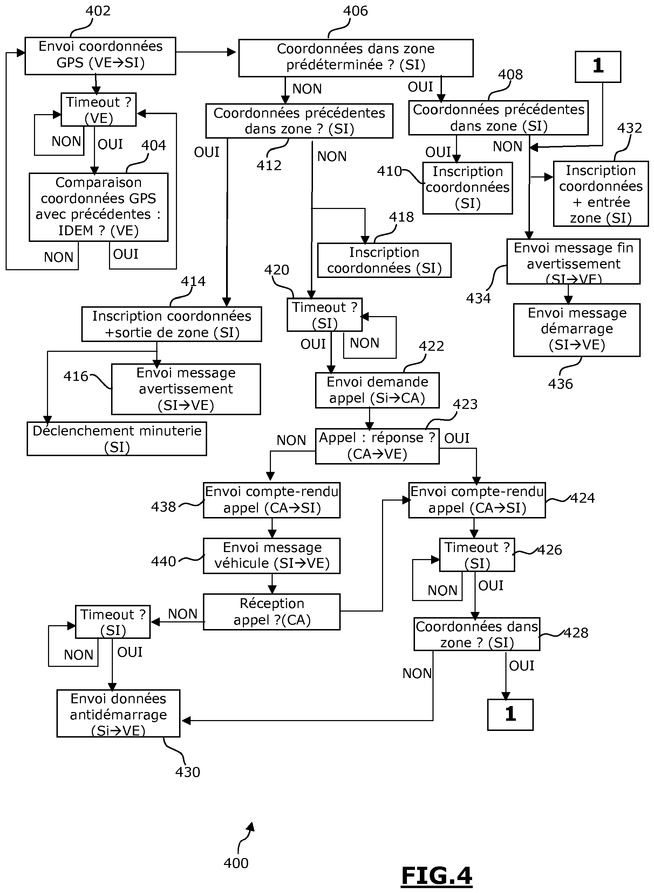

Nous allons maintenant décrire, en référence à la figure 4, un exemple non limitatif d'un procédé selon l'invention.

Le procédé 400 comprend une étape 402 d'envoi des coordonnées de géolocalisation (ou GPS) actuelles du véhicule au site central. Cet envoi de coordonnées GPS est effectué par le module de commande et/ou le module de communication décrit plus haut.

Cet envoi de coordonnées est effectué périodiquement lorsque le véhicule est en mouvement. Ainsi, une fois les coordonnées envoyées, le véhicule attend durant un temps prédéterminé (par exemple 10 s) et récupère à nouveau les coordonnées GPS du véhicule. Il les compare aux coordonnées précédentes, lors d'une étape 404, et si elles sont les mêmes, il attend à nouveau pendant un temps prédéterminé.

Si elles ne sont pas les mêmes que les coordonnées précédentes, il les envoie à nouveau au site central lors d'une nouvelle itération de l'étape 402.

En variante, on pourrait envisager que le système comprenne des moyens pour examiner l'état du véhicule, grâce par exemple à une liaison avec un bus CAN du véhicule. Dans ce cas, les coordonnées GPS du véhicule seraient envoyées si et seulement s'il constate que le moteur est en marche ou que les roues tournent. Les coordonnées peuvent également être envoyées lorsque c'est la première fois que le moyen constate l'arrêt du véhicule.

Les étapes qui seront décrites dans la suite sont réalisées, de manière non limitative et à titre d'exemple particulier, par le site central. Certaines au moins de ces étapes peuvent également être réalisées au niveau du véhicule dans un autre exemple qui ne sortirait pas du champ de la présente invention. Dans ce cas, les étapes sont effectuées de la même façon que décrit ci-après mais le résultat (hors zone ou dans la zone) est communiqué au site central, avec ou sans les coordonnées GPS du véhicule en plus.

Après réception des données GPS, lors d'une étape 406 de test, le site central vérifie si les coordonnées GPS se situent dans une zone prédéterminée. Cette zone est modélisée sous forme de coordonnées GPS dans une base de données du site central. Le site central vérifie par exemple une première coordonnée envoyée par le véhicule pour vérifier que cette coordonnée (latitude par exemple) est située dans une première fourchette de coordonnées. Si cela est le cas, une fourchette de deuxièmes coordonnées (longitude par exemple) correspondant à l'étendue de la zone en matière de longitude pour la latitude à laquelle se trouve le véhicule. Si le véhicule se trouve dans cette fourchette, il est considéré comme se trouvant dans la zone. Si cela n'est pas le cas, il est considéré comme étant situé hors zone.

S'il s'avère que le véhicule se trouve dans la zone prédéterminée, le site central vérifie si les coordonnées précédentes du véhicule étaient déjà dans la zone lors d'une étape 408. Si c'est le cas, lors d'une étape 410, le site central inscrit les coordonnées du véhicule dans une base de données de sorte que ces données soient associées avec l'identifiant du véhicule et/ou l'identifiant de l'utilisateur du véhicule. Le procédé est alors en attente jusqu'à la prochaine réception de coordonnées depuis le véhicule.

Si ce n'est pas le cas, une autre série d'étapes 432 à 436 se produit, que l'on décrira ultérieurement.

Dans le cas où le véhicule ne se trouve pas dans la zone prédéterminée, le site central vérifie si les coordonnées précédentes du véhicule étaient déjà situées hors zone lors d'une étape 412. Cette vérification peut être effectuée par la vérification d'un champ spécifique, indiquant par exemple l'état de sortie de zone du véhicule (dans la zone ou hors zone).

Si les coordonnées précédentes n'étaient pas situées hors zone, les coordonnées actuelles sont inscrites dans une base de données et la valeur du champ spécifique concernant la sortie de zone mentionnée plus haut lors d'une étape 414. Lors d'une étape 416, un message d'avertissement est envoyé à destination du véhicule de sorte que le message s'affiche sur l'écran de l'ordinateur de bord. Un tel message pourrait être « Attention, vous sortez de la zone autorisée. Merci de revenir vers la zone autorisée ». Ce message reste affiché sur l'écran sauf contrordre en provenance de l'organe central.

Cette première sortie déclenche aussi la mise en route d'une minuterie, par exemple de 15 minutes.

S'il ne s'agit pas des premières coordonnées annonçant la sortie de la zone autorisée, et que, de fait, les coordonnées précédentes se trouvaient également hors zone, le site central inscrit les coordonnées lors d'une étape dans une base de données à l'étape et vérifie si la minuterie (la durée de 15 minutes par exemple) est expirée lors d'une étape 420. Si ce n'est pas le cas, il se place en attente mais si c'est le cas, le site central demande à un centre d'appel d'émettre un appel vers le véhicule lors d'une étape 422. En effet, l'ordinateur de bord du véhicule comprend une carte GSM qui permet de communiquer avec un téléphone distant via le réseau GPRS.

On notera que cette étape peut être effectuée également si la distance du véhicule à la zone est supérieure à une distance prédéterminée ou si l'un des critères précités de temps ou de distance est rempli.

Le centre d'appel comprend un logiciel de gestion des priorités des opérateurs. La demande d'appel est classée dans ce logiciel comme urgente et est donc traitée par le premier opérateur qui a fini de traiter sa tâche courante, à moins qu'il y ait d'autres tâches ayant le même degré d'urgence que celle-ci, auquel cas elle est placée dans la file d'attente des tâches urgentes.

Un opérateur du centre d'appel appelle le véhiculelors d'une étape 423. Dès qu'un appel est passé un compte-rendu est envoyé au site central, lors d'une étape 424, lui indiquant si le conducteur du véhicule a répondu à l'appel et, le cas échéant, les mesures à prendre en fonction du déroulement de la conversation.

Si le conducteur a répondu au centre d'appel, la mesure qui est généralement prise est qu'on lui laisse une durée prédéterminée pour regagner la zone prédéterminée lors d'une étape 426. Cette durée peut être déterminée automatiquement ou manuellement par un opérateur du centre d'appel en fonction de ce que lui a appris sa conversation avec l'utilisateur.

Une fois la durée prédéterminée, décomptée par le site central, dépassée, le site central vérifie si les nouvelles coordonnées GPS ou donnée relative à la sortie de zone du véhicule sont hors zone lors d'une étape 428. Cette vérification peut être basée sur les dernières coordonnées GPS reçues du véhicule ou sur des coordonnées demandées expressément par le site central.

S'il s'avère que les coordonnées sont toujours hors zone après la durée prédéterminée, le site central envoie un message à destination du véhicule contenant une donnée activant l'anti-démarrage du véhicule lors d'une étape 430.

En effet, la réception de certaines données au niveau du boîtier est apte à déclencher l'activation d'un signal de commande tel que décrit plus haut en référence à la figure 3. Généralement, une de ces données est une donnée nommée « ESA » qui active un signal dont la caractéristique permet, en combinaison avec d'autres signaux d'activer le démarrage du groupe motopropulseur. Cette donnée est stockée par le véhicule. Ainsi, lorsque le véhicule s'arrête, il ne sera plus possible de le démarrer à nouveau, ce qui permettra d'éviter un éloignement plus important du véhicule de la zone.

Si après la durée prédéterminée, le véhicule a regagné la zone, on effectue les étapes suivantes.

Lors d'une étape 432, les nouvelles coordonnées du véhicule sont inscrites et dans la base de données, dans le champ indiqué à cet effet, il est indiqué que le véhicule a regagné la zone, par exemple en modifiant une valeur binaire du type « hors_zone ».

Lors d'une étape 434, un message de fin d'avertissement est envoyé au véhicule, notamment à l'ordinateur de bord de celui-ci, pour générer la fin de l'avertissement de l'utilisateur. Un message peut même indiquer à ce dernier qu'il a regagné la zone.

Un message peut être envoyé au véhicule avec une donnée ESA présentant une valeur autorisant le démarrage lors d'une étape 436. Ce dernier message pourrait également n'être envoyé que si cela était nécessaire, par exemple si la donnée ESA actuelle du véhicule n'autorise pas le démarrage.

Les étapes précitées 432-436 sont également effectuées lorsque le véhicule rentre dans la zone à savoir lorsque les coordonnées GPS sont déterminées comme étant dans la zone mais que les coordonnées précédentes n'étaient pas déterminées dans la zone, sans que la procédure d'appel ait été déclenchée.

Si aucune réponse à l'appel effectué par le centre lors de l'étape 423, n'a été reçue les coordonnées sont inscrites lors d'une étape 438. Lors d'une étape 440, le site central envoie un message au véhicule pour que celui-ci s'affiche sur l'ordinateur de bord du véhicule demandant au conducteur du véhicule d'appeler le centre d'appel à un numéro donné avant la fin d'une durée prédéterminé (par exemple, 5 minutes).

Le centre d'appel (ou le site central) décompte ensuite cette durée prédéterminée. Si avant la fin de cette durée, un appel a été reçu, le procédé est renvoyé à l'étape 424 d'envoi du compte-rendu de l'appel par l'opérateur du centre d'appel. Dans le cas contraire, les données d'anti-démarrage, comme décrites ci-dessus, sont envoyées au véhicule par le site central lors de l'étape 430.

Le procédé selon l'invention n'est pas limité à ce qui a été décrit ci-dessus. On pourrait imaginer de nombreuses variantes.

Par exemple, la donnée d'anti-démarrage pourrait être envoyée au véhicule seulement si, au moment de l'arrêt de celui-ci, il est vérifié que les coordonnées du véhicule sont hors zone.

Il est également possible d'envisager que, lorsque le véhicule sort de la zone ou lorsque les données d'anti-démarrage lui sont envoyées, le site central envoie conjointement un SMS à l'utilisateur présumé du véhicule après avoir obtenu son numéro de téléphone à partir d'une base de données client et d'une base de données reliant l'identifiant de l'utilisateur à l'identifiant du véhicule.

Ce SMS peut permettre à l'utilisateur :
- en cas de vol : de se rendre compte qu'il s'est fait voler le véhicule s'il ne s'en était pas encore aperçu. Il peut alors appeler le centre d'appel. Cela peut déclencher l'envoi de données d'anti-démarrage au véhicule sans délai et l'envoi d'un SMS aux forces de l'ordre pour qu'elles récupèrent le véhicule ; ou
- d'indiquer à un centre d'appel qu'il est bien la personne au volant du véhicule, par exemple en donnant à l'opérateur un mot de passe présent dans le SMS. Cela peut permettre de lever l'anti-démarrage sur le véhicule par l'envoi de données depuis le site central.

Lorsque le véhicule quitte la zone prédéterminée, au moins pour une durée supérieure à la durée prédéterminée ou une distance supérieure à la distance prédéterminée, le site central peut l'inscrire dans une base de données relative à la facturation, ce qui engendrera un surcoût pour le client. Les données inscrites dans la base de données peuvent comprendre l'heure où la zone est quittée ou la durée/distance critique dépassée, l'heure où la zone est regagnée, etc.

Les coordonnées de la zone pourraient également être stockées dans le véhicule et vérifiées localement.

Le véhicule peut également transmettre au site central le cap du véhicule. Si le site central détermine, lorsque le véhicule est hors zone, que ce dernier se dirige à nouveau vers la zone, certaines actions peuvent ne pas être effectuées, tel que par exemple l'envoi de données d'anti-démarrage.

Bien entendu, le déroulement des différentes étapes de signalisation peut être complètement différent de ce qui a été décrit. Par exemple, n'importe quelle signalisation décrite ci-dessus peut être déclenchée dès que le véhicule quitte la zone de location prédéterminée, ou dépasse un temps ou une distance prédéterminée hors zone.

Bien entendu l'invention n'est pas limitée aux exemples qui viennent d'être décrits.

## Revendications

1. Procédé (400) de surveillance d'un véhicule proposé à la location, ledit véhicule comprenant un dispositif de géolocalisation/navigation (208) agencé pour déterminer et renseigner les coordonnées de localisation dudit véhicule, ledit procédé comprenant les étapes suivantes :
- vérification (406) que les coordonnées de localisation dudit véhicule se trouvent dans une zone prédéterminée (124) préalablement enregistrée, et
- si les coordonnées de localisation ne se trouvent pas dans la zone prédéterminée (124), exécution d'une étape (408-440) de signalisation d'anomalie ;
**caractérisé en ce que** l'étape de signalisation comprend les étapes suivantes :
- émission depuis un site central (102) d'une donnée anti-démarrage empêchant le démarrage du véhicule une fois que le véhicule sera arrêté,
- émission depuis le site central (102) d'un message à l'utilisateur dudit véhicule, au travers d'un réseau GPRS, invitant l'utilisateur à s'identifier à nouveau,
- nouvelle identification de l'utilisateur auprès d'un centre d'appel et
- émission depuis le site central (102) d'une donnée de démarrage autorisant le démarrage du véhicule en cas d'identification correct dudit utilisateur.

2. Procédé selon la revendication 1, **caractérisé en ce que** l'étape de vérification (406) est réalisée uniquement si le véhicule est en mouvement.

3. Procédé selon l'une quelconque des revendications précédentes, **caractérisé en ce qu'**il comprend en outre une étape de vérification de données relatives au cap et/ou à la destination du véhicule.

4. Procédé selon l'une quelconque des revendications précédentes, dans lequel les coordonnées de localisation et/ou le résultat de l'étape de vérification sont transmises (402) au site central.

5. Procédé selon l'une quelconque des revendications précédentes, dans lequel l'étape de signalisation est initiée par le site central.

6. Procédé selon l'une quelconque des revendications précédentes, **caractérisé en ce que** l'étape de signalisation comprend en outre une étape d'affichage (440) d'une alerte sur une interface utilisateur du véhicule.

7. Procédé selon l'une quelconque des revendications précédentes, **caractérisé en ce qu'**il comporte avant l'étape de signalisation, une étape (408, 412) dite de test supplémentaire, comprenant une vérification d'une ou plusieurs des conditions listées ci-dessous :
- cap ou destination du véhicule,
- distance d'éloignement de la zone,
- durée depuis la sortie de la zone, et
- réponse à un appel téléphonique ou message en provenance du site central.

8. Système (100) de surveillance d'un véhicule proposé à la location, ledit véhicule comprenant un dispositif de géolocalisation/navigation (208) agencé pour déterminer et renseigner les coordonnées de localisation dudit véhicule, ledit système comprenant :
- au moins un moyen (220, 122) de vérification que les coordonnées de localisation dudit véhicule se trouvent dans une zone prédéterminée (124) préalablement enregistrée, et
- au moins un moyen (126, 210, 216, 218) d'exécution d'une étape de signalisation d'anomalie si les coordonnées de localisation ne se trouvent pas dans la zone prédéterminée (124) ;
configurés pour mettre en œuvre le procédé selon l'une quelconque des revendications précédentes.

## Patentansprüche

1. Verfahren (400) zur Überwachung eines zur Vermietung angebotenen Fahrzeugs, wobei das Fahrzeug eine Ortsbestimmungs-/Navigationsvorrichtung (208) umfasst, welche zur Bestimmung und Angabe der Ortungsdaten des Fahrzeugs angeordnet ist, wobei das Verfahren folgende Schritte umfasst:
- Prüfung (406), dass die Ortungsdaten des Fahrzeugs in einem vorgegebenen, vorab eingetragenen Bereich (124) liegen, und
- Ausführung eines Schrittes (408-440) zur Meldung einer Störung bei Nichtliegen der Ortungsdaten in dem vorgegebenen Bereich (124);
**dadurch gekennzeichnet, dass** der Meldungsschritt folgende Schritte umfasst:
- Aussendung eines das Starten des Fahrzeugs nach Anhalten des Fahrzeugs verhindernden Kennwerts zur Wegfahrsperre von einer Zentralstelle (102) aus,
- Aussendung, von der Zentralstelle (102) aus, über ein GPRS-Netz, einer Nachricht an den Benutzer des Fahrzeugs, sich erneut zu identifizieren,
- erneute Identifizierung des Benutzers bei einer Telefonzentrale, und
- Aussendung eines bei richtiger Identifizierung des Benutzers das Starten des Fahrzeugs freigebenden Kennwerts zum Starten von der Zentralstelle (102) aus.

2. Verfahren nach Anspruch 1, **dadurch gekennzeichnet, dass** der Prüfungsschritt (406) nur dann ausgeführt wird, wenn das Fahrzeug in Bewegung ist.

3. Verfahren nach einem der vorhergehenden Ansprüche, **dadurch gekennzeichnet, dass** es außerdem einen Schritt zur Prüfung von Kennwerten bezüglich des Steuerkurses und/oder des Bestimmungsorts des Fahrzeugs umfasst.

4. Verfahren nach einem der vorhergehenden Ansprüche, bei welchem die Daten zur Ortsbestimmung und/oder das Ergebnis des Prüfungsschrittes an die Zentralstelle (402) weitergeleitet werden.

5. Verfahren nach einem der vorhergehenden Ansprüche, bei welchem der Meldungsschritt durch die Zentralstelle ausgelöst wird.

6. Verfahren nach einem der vorhergehenden Ansprüche, **dadurch gekennzeichnet, dass** der Meldungsschritt außerdem einen Schritt zur Anzeige (440) eines Warnsignals auf einer Benutzerschnittstelle des Fahrzeugs umfasst.

7. Verfahren nach einem der vorhergehenden Ansprüche, **dadurch gekennzeichnet, dass** es außerdem vor dem Meldungsschritt einen zusätzlichen, sogenannten Testschritt (408, 412) enthält, welcher eine Prüfung einer oder mehrerer der unten aufgeführten Bedingungen umfasst:
- Steuerkurs oder Bestimmungsort des Fahrzeugs,
- Entfernung von dem Bereich,
- Zeitdauer seit dem Herausfahren aus dem Bereich, und
- Antwort auf einen Telefonanruf oder auf eine Nachricht aus der Zentralstelle.

8. Einrichtung (100) zur Überwachung eines zur Vermietung angebotenen Fahrzeugs, wobei das Fahrzeug eine Ortsbestimmungs-/Navigationsvorrichtung (208) umfasst, welche zur Bestimmung und Angabe der Ortungsdaten des Fahrzeugs angeordnet ist, wobei die Einrichtung umfasst:
- mindestens ein Mittel (220, 122) zur Prüfung, dass die Ortungsdaten des Fahrzeugs in einem vorgegebenen, vorab eingetragenen Bereich (124) liegen, und
- mindestens ein Mittel (126, 210, 216, 218) zur Ausführung eines Schrittes zur Störungsmeldung, wenn die Ortungsdaten nicht in dem vorgegebenen Bereich (124) liegen;
welche darauf eingerichtet sind, das Verfahren nach einem der vorhergehenden Ansprüche anzuwenden.

## Claims

1. A method (400) for monitoring a vehicle available for rental, said vehicle comprising a global positioning/navigation device (208) arranged to determine and notify the location coordinates of said vehicle, said method comprising the following steps:
- verifying (406) that the location coordinates of said vehicle are situated in a previously registered predetermined zone (124), and
- if the location coordinates are not situated in the predetermined zone (124), executing an anomaly signalling step (408-440);
**characterized in that** the signalling step comprises the following steps:
- sending, from a central site (102), of an immobilizing data preventing the starting of the vehicle once the vehicle is switched-off;
- sending, from the central site (102), of a message to the user of the vehicle, over the GPRS network, inviting the user for a new identification;
- new identification of the user nearby a call centre; and
- sending, from the central site (102), of an authorisation data allowing the starting of the vehicle, if the new identification is successful.

2. The method according to the previous claim, **characterized in that** the verification step (406) is carried out only if the vehicle is moving.

3. The method according to any one of the previous claims, **characterized in that** it also comprises a step of verifying data relating to the course and/or destination of the vehicle.

4. The method according to any one of the previous claims, in which the location coordinates and/or the result of the verification step are transmitted (402) to the central site.

5. The method according to any one of the previous claims, in which the signalling step is initiated by the central site.

6. The method according to any one of the previous claims, **characterized in that** the signalling step can comprise a step of displaying (440) a warning on a user interface of the vehicle.

7. The method according to any one of the previous claims, **characterized in that** it comprises, before the signalling step, a step (408, 412) called an additional test, comprising a verification of one or more of the conditions listed below:
- course or destination of the vehicle,
- distance away from the zone,
- period since leaving the zone, and
- response to a telephone call or message originating from the central site.

8. A system (100) for monitoring a vehicle available for rental, said vehicle comprising a global positioning/navigation device (208) arranged to determine and notify the location coordinates of said vehicle, said system comprising:
- at least one means (220, 122) of verifying that the location coordinates of said vehicle are situated in a previously registered predetermined zone (124), and
- at least one means (126, 210, 216, 218) of executing an anomaly signalling step if the location coordinates are not situated in the predetermined zone (124);
configured to implement the method according to any of the previous claims.
